# EUROPEAN PATENT SPECIFICATION

(11) **EP 1 935 578 B1**
(45) Date of publication and mention of the grant of the patent: **25.01.2012**
(21) Application number: 06126974.2
(22) Date of filing: 22.12.2006
(51) Int. Cl.: B25J 9/16

(54) **Control system**
Steuersystem
Système de contrôle

(43) Date of publication of application: 25.06.2008
(73) Proprietor: ABB Research Ltd., 8050 Zürich (CH)
(72) Inventor: Wäppling, Daniel, SE-722 18, Västerås (SE); Andersson, Hans, SE-725 91, Västerås (SE)
(74) Representative: Dahlstrand, Björn

(56) References cited:
- EP-A- 1 518 648
- WO-A-2005/124482
- JP-A- 10 309 683
- US-A1- 2002 120 361

## Description

### BACKGROUND OF THE INVENTION AND PRIOR ART

The present invention relates to a control system for an industrial robot, wherein the control system comprises a memory unit intended to comprise at least one robot program intended for controlling the movements of the robot, comprising movement instructions for controlling the movements of the robot, and a program executer designed to generate instructions based on movement instructions included in the program as well as data necessary to be able to carry out said instructions, to a path planner configured to receive said instructions from the program executer and hence to plan how the movements of the robot are to be designed in order to be able to carry out said movement instructions.

Today, off-line simulation is used when designing industrial robots, robot cells and the task programs of the robots, based on the performance requirements imposed by the user, for example the loads that the robots shall manage to carry, the work the robots are to carry out, or the number of executed work cycles per defined period of time. However, sometimes the user's subject the robots to higher loads than what was originally intended, which, for example, may be due to the fact that the robot tool is heavier than what was originally intended or that the objects to be processed are heavier than what was intended. Another reason for robots being overloaded is that they are forced to carry out more work cycles per unit of time, for example per hour, than what was originally intended. The problems that arise when robots are subjected too frequently to overloads are, among other things, that the parts of the robots are worn more rapidly than what was expected, with an insufficient production result as an immediate consequence. Further, this implies that the service life of the robots is reduced, that the production stoppages increase, and that the service intervals are closer.

If a user today wants to know if it is possible to increase, for example, the load or the number of work cycles without this having a negative influence on a robot, it is currently not possible to get an answer to this without first checking the task program to see what loads can be used and then carrying out a plurality of time-consuming off-line simulations, which often have to be carried out by consistently counting on values that imply that the risk of faults occurring on the robot or on the work carried out is greatest, which still in many cases does not provide a sufficient amount of data to give an answer that is completely correct or completely solves the problem arisen. This is due to the fact that, when carrying out simulation, there are no data whatsoever as to how the robot has performed during previous work cycles, while at the same time there are no data showing how much the robot has been in operation compared to its downtime.

Another question often put by the user to the manufacturer is, for example, why a robot has failed completely or partly, does not operate satisfactorily, or does not perform the work conceived as planned. Also in this case, the program must be checked to see what how the robot was supposed to have operated, after which time-consuming simulations, according to what has been described above, have to be carried out. Also these simulations fail to provide a satisfactory answer or solution as to why the problems have arisen, for the same reason as previously described.

Another frequent problem arises when a user wishes to know when service is to be scheduled to allow him to carry out this service before the robot is damaged in some way, in order thus to suffer the least possible loss of production. Today, this can only be estimated with the aid of time-consuming simulations which do not provide sufficiently precise answers to the above-mentioned question. To obtain good safety margins, the service to the robot is currently scheduled to take place much earlier than what is really necessary, which, spread over the entire life of the robot, means that it is stopped unnecessarily many times for service.

European patent application EP 1518648 A2 discloses a robot system capable of reproducing a situation of alarm. The robot system includes a simulation unit for simulating the operations of the robot. The robot includes means for storing a predetermined amount of the latest executed operation commands, when an alarm is issued. The purpose of the robot system disclosed in EP 1518648 A2 is to reproduce the situation in which the alarm was issued, in order to analyze the cause of the alarm.

One disadvantage of known simulation methods is that it can only be roughly estimated how often a certain part of the program is run. In addition, with known simulation methods it is not possible to see how the robot is influenced by the umber of work cycles carried out, which makes it difficult to predict when the robot will break down.

Another known problem-solution method is to read and save the control signals that control the motors of the robots since these signals are generated based on the phase-angle values measured on the respective shafts of the robot by sensors provided thereon. Depending on the quantity of the phase angle, the output motor torque for the respective motor is controlled. The problem with this, besides being time-consuming work just as the previous problem solutions, is that it only answers the question what has happened to the robot but does not give the reason for the problems. The reasons for the problems may, for example, be:
_ inferior design of the robot,
_ too tough work cycles,
_ faulty loads,
_ etc.

Solving these problems, however, is not possible without first working out proposals for changes, such as reconfiguration of the robot or the robot program, and then verifying these proposals for changes on the robot. Today, it is also necessary to be physically present around the robot in order to carry out different measurements for the purpose of gathering measurement data in order later on to carry out simulations with the object of trying to see what could possibly have caused the problems. This is both expensive and time-consuming and also causes stoppages in production.

### SUMMARY OF THE INVENTION

The object of the present invention is to provide a control system for at least an industrial robot which increases the possibilities of identifying any sources of error and which increases the possibilities of providing an answer as to whether the robot for a certain specified application is capable of running heavier loads than what the robot was originally specified for, or when it is suitable to plan production stoppages into the schedule for service of the robot.

This object is achieved with the initially indicated control system which is characterized in that the control system includes a recording device designed for the purpose of recording and storing the instructions sent to the path planner from the program executer as well as data necessary to carry out the instructions to the path planner.

Data necessary for the path planner to carry out the instructions are, for example, values of variables and parameters referred to in the instructions. Examples of data are variable values such as the position of the next point to which the robot is to move, at what speed the robot is to move, and what load the robot is to carry.

When later on it is desirable to carry out an analysis, for example as to:
- why the fault has occurred,
- how service intervals should be predicted,
- optimization of the performance of the robot,
the recorded data and the instructions are processed in an external data-processing unit so that the movements carried out by the robot may be re-created. By simulating the re-created movements, analyses according to the above may then be carried out with good accuracy with the aid of the simulation results. The simulation results may also be compared with previous experimentally measured data in order thus to obtain additional information to be used for identifying a fault. Compared with the solutions according to the prior art, this solution provides the following advantages:
- the movements actually carried out by the robot may be simply analyzed and re-created without having to obtain information from any peripheral equipment, such as a PLC (Programmable Logic Controller), I/O or sensors,
- which results in the simulations being carried out faster than earlier and with higher precision and quality,
- since the actual movements are available, proposals for changes may be obtained and verified,
- measured data in combination with experimentally measured data provide the possibility of detecting faults that previously were very difficult to identify.

Further, this solution results in a number of additional advantages, such as:
- the operational availability of the robot is increased,
- the time between planned service intervals may be extended while at the same time it will be easier to plan servicing of the robot, including the control system, so that the service can be synchronized with servicing of any other robots or other equipment connecked thereto,
- it facilitates identifying weak spots on the robot so that these can be modified or reinforced,
- it facilitates calculating the service life of the robot with a high degree of reliability.

According to an advantageous embodiment of the invention, the recording device is configured to record and store time indications showing the actual instant in time when the instructions and said data were sent from the program executer to the path planner. By this embodiment, the exact time when an instruction was carried out is given, which is not possible by only by looking at the task program which contains a large number of commands implying that the robot is maintained in a position of rest.

According to another embodiment of the invention, a communication link is arranged for the purpose of transferring the instructions recorded and stored by the recording device as well as said data to an external data-processing unit. Further, the transfer of the instructions and said data to the external data-processing unit advantageously takes place in real time. Said communication link may be a signal cable, but also a modem may be used to transfer said read-off instructions and said read-off data to an external data-processing unit via, for example, internal computer networks or via the Internet. By these embodiments, read-off data are readily available independently of one's physical position with respect to the robot. In addition, these embodiments make possible a dynamic configuration of the robot, since the control parameters of the robot may be configured for the production requirement that prevails at the time in question, which means that the wear of the robot can be minimized.

According to a further embodiment of the invention, a second recording device is arranged for the purpose of recording and storing control signals sent from the control system to the motors of the robot. By this embodiment, rapid information is provided as to what loads have been carried in reality, and this fact, together with the recorded movement instructions, will contribute to facilitate analyzing and detecting why one or more faults have occurred.

The object of the invention is also achieved with a method according to claim 6, and such a method comprises recording the instructions emanating from the program executer as well as said data before these instructions are received by the path planner.

### BRIEF DESCRIPTION OF THE DRAWINGS

In the following the invention will be described in greater detail with reference to the accompanying drawing.

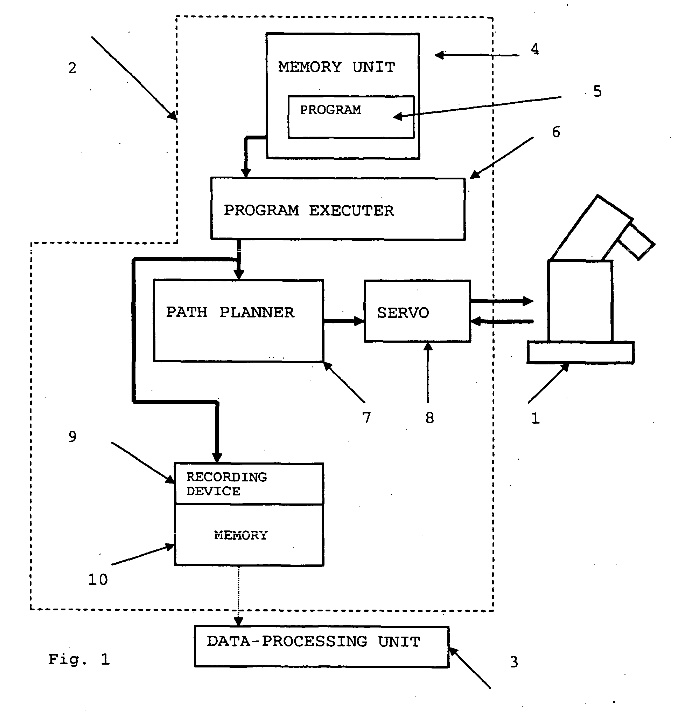

Figure 1 shows an industrial robot system comprising a control system according to one embodiment of the invention.

### DETAILED DESCRIPTION OF VARIOUS EMBODIMENTS OF THE INVENTION

Figure 1 shows an industrial robot system comprising a robot 1, a control system 2 for controlling the movements of the robot 1 and a data-processing unit 3 intended to receive data from the control system 2. The control system 2 comprises a memory unit 4 containing a task program 5 that includes instructions for controlling the movements of the robot 1, a program executer 6 intended to execute the task program 5, a path planner 7 intended to receive instructions and data from the program executer 6 and based theron to plan the movements of the robot 1 and to generate reference values for the motors of the robot 1, and a servo 8 connected thereto which is configured to receive the reference values from the path planner 7 and based thereon to generate control signals to the motors of the robot 1. According to the invention, the control system 2 further comprises a recording device 9 comprising a memory unit 10 adapted to record and store the instructions and data sent by the program executer 6 to the path planner 7. The recording device 9 logs which commands and data are sent by the program executer 6 to the path planner 7 and at what time this occurs. This information is then stored on the memory unit 10.

What is saved is either:
- all instructions and data that were ever sent to the path planner 7,
- the instructions and data that were sent to the path planner 7 during a predetermined period of time,
- a predetermined number of instructions and data sent to the path planner 7, or
- the most commonly occurring instructions and data sent to the path planner 7.

From the recording device 9, recorded instructions and data are transferred to the data-processing unit 3, either continuously or on command, for further processing and analysis of data and instructions. In the embodiment shown, the data-processing unit 3 is arranged externally, but the data-processing unit 3 may also be arranged in the existing control system 2. For example, the recorded instructions and data are processed in the external data-processing unit 3 so that the movements carried out by the robot 1 are re-created. By simulating the re-created movements, different types of analyses may then be carried out with the aid of the simulation results.

Data to the path planner 7 comprise variable values which, for example, may be the position where the robot 1 is to move, at what speed the robot 1 is to move, or what load the robot 1 should carry. The variable values may:
- be predefined for the robot type,
- have previously been defined in the task program 5,
- be dependent on the value of an I/O signal,
- be defined in the executed program instruction, or
- be stored in a memory 4 in the controls system.

The variable values that are to be forwarded as data may be indicated by the client via different channels, such as, for example, the task program 5, the programming equipment or via cfg files. These values may also be obtained via external sensors but will then enter as data via the above-mentioned channels.

One example of a program instruction in the task program 5 may be: "MoveJ p_Rep, v60, fine, t_in;"

The program executer 6 generates, based on the above program instruction, the following instruction and data to the path planner 7:
"MoveJ[[0.34,404.47, 1214.72], [0.00012, 0.999974, 0.00731,4.6E-05], [0,-1,-2,0], [9E+09,9E+09, 9E+09, 9E+09, 9E+09, 9E+09]], [60, 120, 500, 500,
500], fine, [TRUE, [[0,0,210], [1,0, 0,0]], [6,[340, 0,0], [1,0, 0, 0] , 0, 0, 0]] ;"

The task of the program executor 6 is to obtain the necessary data to the path planner 7, and to generate a matrix containing these data. The matrix is the used by the path planner 7 together with the instructions sent from the program executer 6 to plan the path of the robot 1.

The following example describes a task program 5 and what instructions are generated to the path planner 7, based on the instructions in the task program 5.

An example of a program:

```
 MODULE EXAMPLE
   PROC MAIN()
          i:= 0;
         WHILE TRUE DO
              IF i = 27 THEN
                   MoveFast;
              END
              IF i = 1 THEN
                   MoveL A
                   path_2;
              ELSE
                   Wait 10;
                   AccSet 50,50;
                   i:= get_next_i;
              ENDIF
              IF i = 2 THEN
                   AccSet 100,100;
                   path_2;
                   path_3;
              ELSE
                   MoveJ A;
                   Wait ;
                   AccSet 50,50;
                   path_1;
                   i:= get_next_i;
              ENDIF.
              ENDWHILE
   ENDPROC
   PROC path_1()
                   MoveL A;
                   MoveJ A;
   ENDPROC
   PROC path_2()
                   MoveL B;
   ENDPROC
   PROC path_3()
                   MoveL C;
                   path_1;
   ENDPROC
 ENDMODULE
```

"AccSet" is a command that determines the level of performance of the robot 1, where for example "100,100" means that 100 % of the performance of the robot 1 is utilized, and "50,50" means that 50 % of the performance of the robot 1 is utilized.

It may be that, for example, the movement carried out by the instruction "MoveFast" in the above task program 5 is so tough that the robot 1 does not manage to run this movement more than, for example, 10 times per unit of time. The instruction "MoveFast" is carried out each time the variable "i" has the value "27", and if the variable "i" is then assigned the value "27" each turn in the "WHILE" loop, the robot 1 will break down very quickly. To be able to know how many times the instruction "MoveFast" is carried out, the value of the variable "i" must be known. Since the value of the variable "i" is difficult to know from the beginning, the value of the variable "i" must be estimated based on guesswork and previous experience.

To be able to determine whether the robot 1 will manage to run the task program above for a certain application without being damaged, it is necessary to know how many times the instruction "MoveFast" is run in reality per unit of time. In reality, the command "MoveFast" is perhaps only run once per year or never.

If only the task program 5 shown above is used to determine if the robot 1 will manage to run the program for a certain application without being damaged, attempts must be made to create "all" possible sequences of movements while considering the "worst case" scenario. However, this is a time-consuming task and the result is uncertain since the value of the variable "i" is unknown.

To avoid the work described above, which is both time-consuming and uncertain as far as the result is concerned, the instructions from the program executer 6 to the path planner 7 are recorded while at the same time the instant when the instructions are sent from the program executer 6 to the path planner 7 is recorded and stored on the memory unit 10. These recorded instructions and time indications show how many times per unit of time the instruction "MoveFast" has been sent to the path planner 7. Thus, it is not necessary to know the value of "i" in order to determine how many times the instruction "MoveFast" has been carried out per unit of time.

The recording device 9 will record and store the following data:

| Time | Instruction | Data |
|---|---|---|
| 1244679093364 | Wait 10 | AccSet 50,50 |
| 1244679093625 | MoveJ A | AccSet 50,50 |
| 1244679093796 | Wait 3 | |
| 1244679093933 | MoveL A | AccSet 50,50 |
| 1244679093944 | MoveJ A | AccSet 50,50 |
| 1244679093958 | Wait 10 | |
| 1244679094084 | MoveJ A | AccSet 50,50 |
| 1244679094249 | Wait 3 | |
| 1244679094462 | MoveL A | AccSet 50,50 |
| 1244679094593 | MoveJ A | AccSet 50,50 |
| 1244679094778 | Wait 10 | |
| 1244679095162 | MoveL B | AccSet 100,100 |
| 1244679095329 | MoveL C | AccSet 100,100 |
| 1244679095399 | MoveL A | AccSet 100,100 |
| 1244679095449 | MoveJ A | AccSet 100,100 |
| 1244679095578 | Wait 10 | |
| 1244679095769 | MoveJ A | AccSet 50,50 |
| 1244679095880 | Wait 3 | |
| 1244679096205 | MoveL A | AccSet 50,50 |
| 1244679096292 | MoveJ A | AccSet 50,50 |

The data column will in practice also include a set of variable values which influence the conceived path according to which the robot 1 is to work.

In this situation, thus, all the sequences of movement-related commands will be known because of the recording device 9 which records the information quite correctly and hence indirectly makes possible an analysis of the actual movements of the robot 1 with the aid of the external data-processing unit 3.

## Claims

1. A control system (2) for an industrial robot (1), wherein the control system (2) comprises a memory unit (4) containing a task program (5) that includes instructions for controlling the movements of the robot (1), as well as a program executer (6) configured to generate and send instructions based on movement instructions included in the task program (5) as well as data, including values of variables and parameters referred to in said instructions, necessary to be able to carry out said instructions, to a path planner configured to receive said instructions and data from the program executer (6) and based thereon to plan how the movements of the robot (1) are to be designed to enable it to carry out said movement instructions and based thereon generate reference values for motors of the robot, the control system (2) includes a recording device with at least one memory unit (10) connected thereto, and an external data-processing unit wherein the recorded data and instructions are processed so that the movements carried out by the robot can be re-created, **characterized in that** the recording device is arranged for the purpose of recording and storing said instructions and said data being sent to the path planner (7) from the program executer (6).

2. A control system according to claim 1, **characterized in that** the recording device (9) is configured to record time indications showing the actual instant in time when the instructions and said data have been sent from the program executer (6) to the path planner (7).

3. A control system according to claims 1 and 2, **characterized in that** the control system (2) is configured to transfer the recorded instructions and said data from the memory (10) arranged in the recording device (9) to an external data-processing unit (3).

4. A control system according to claim 3, **characterized in that** the control system (2) is configured to transfer the recorded instructions and said data from the memory (10) arranged in the recording device (9) to the external data-processing unit (3) in real time.

5. A control system according to any of the preceding claims, **characterized in that** the control system (2) further includes a second recording device arranged for the purpose of recording and storing control signals sent from the control system (2) to the motors of the robot (1).

6. A method for monitoring an industrial robot (1) comprising a memory unit (4) containing a task program (5) that includes instructions for controlling the movements of the robot (1), as well as a program executer (6) configured to generate and send instructions based on movement instructions included in the task program (5) as well as data, including values of variables and parameters referred to in said instructions, necessary to be able to carry out said instructions to a path planner (7) configured to receive said instructions and data from the program executer (6) and based thereon to plan how the movements of the robot (1) are to be designed to enable it to carry out said movement instructions and based thereon generate reference values for motors of the robot, **characterized in that** the method comprises:
- recording and storing said instructions and said data sent by the program executer (6) to the path planner,
- processing the recorded data and instructions so that the movements carried out by the robot can be re-created and based thereon monitoring the robot.

7. A method for monitoring an industrial robot (1) according to claim 6, **characterized in that** the method comprises recording and storing the actual instant in time when the instructions and said data are sent from the program executer (6) to the path planner (7).

8. A method for monitoring an industrial robot (1) according to claims 6 and 1, **characterized in that** the method comprises transferring the recorded and stored instructions and said data to an external data-processing unit (3).

9. A method for monitoring an industrial robot (1) according to claim 8, **characterized in that** the method comprises transferring the recorded and stored instructions and said data to the external data-processing unit (3) in real time.

10. A method for monitoring an industrial robot (1) according to any of the preceding claims 6-9, **characterized in that** the method comprises recording and storing the control Signals sent from the control system (2) to the motors of the robot.

## Patentansprüche

1. Steuersystem (2) für einen Industrieroboter (1), wobei das Steuersystem (2) eine Speichereinheit (4), welche ein Aufgabenprogramm (5) enthält, das Befehle für das Steuern der Bewegungen des Roboters (1) aufweist, als auch eine Programmausführungsvorrichtung (6) umfasst, welche so konfiguriert ist, um Befehle auf der Grundlage von Bewegungsbefehlen, die im Aufgabenprogramm (5) enthalten sind, als auch auf der Grundlage von Daten, die Werte von in Bezug auf die Befehle stehenden Variablen und Parametern umfassen, welche für das Ausführen der Befehle notwendig sind, an einen Pfadplaner zu erzeugen und zu senden, welcher so konfiguriert ist, um die Befehle und Daten von der Programmausführungsvorrichtung (6) zu empfangen und auf dieser Grundlage zu planen, wie die Bewegungen des Roboters (1) zu gestalten sind, um ihn in die Lage zu versetzen, die Bewegungsbefehle auszuführen und, basierend darauf, Bezugswerte für Motoren des Roboters zu erzeugen, wobei das Steuersystem (2) eine Aufzeichnungsvorrichtung mit wenigstens einer Speichereinheit (10), welche damit verbunden ist, und mit einer externen Datenverarbeitungseinheit umfasst, wobei die aufgezeichneten Daten und Befehle so verarbeitet werden, dass die Bewegungen, welche durch den Roboter ausgeführt werden, neu erstellt werden können, **dadurch gekennzeichnet, dass** die Aufzeichnungsvorrichtung für den Zweck des Aufzeichnens und Speicherns der Befehle und der Daten, welche an den Pfadplaner (7) von der Programmausführungsvorrichtung (6) gesendet werden, ausgelegt ist.

2. Steuersystem nach Anspruch 1, **dadurch gekennzeichnet, dass** die Aufzeichnungsvorrichtung (9) konfiguriert ist, um Zeitkennzeichen aufzuzeichnen, welche den tatsächlichen Augenblick im Zeitablauf zeigen, zu dem die Befehle und die Daten von der Programmausführungsvorrichtung (6) zum Pfadplaner (7) gesendet worden sind.

3. Steuersystem nach Anspruch 1 und 2, **dadurch gekennzeichnet, dass** das Steuersystem (2) konfiguriert ist, um die aufgezeichneten Befehle und Daten vom Speicher (10), welcher in der Aufzeichnungsvorrichtung (9) angeordnet ist, an eine externe Datenverarbeitungseinheit (3) zu übertragen.

4. Steuersystem nach Anspruch 3, **dadurch gekennzeichnet, dass** das Steuersystem (2) konfiguriert ist, um die aufgezeichneten Befehle und Daten vom Speicher (10), welcher in der Aufzeichnungsvorrichtung (9) angeordnet ist, an eine externe Datenverarbeitungseinheit (3) in Echtzeit zu übertragen.

5. Steuersystem nach jedem beliebigen der vorangehenden Ansprüche, **dadurch gekennzeichnet, dass** das Steuersystem (2) des Weiteren eine zweite Aufzeichnungsvorrichtung umfasst, welche zum Zweck des Aufzeichnens und Speicherns von Steuersignalen, die vom Steuersystem (2) an die Motoren des Roboters (1) gesandt werden, angeordnet ist.

6. Verfahren zum Überwachen eines Industrieroboters (1), umfassend eine Speichereinheit (4), welche ein Aufgabenprogramm (5) enthält, das Befehle für das Steuern der Bewegungen des Roboters (1) aufweist, als auch eine Programmausführungsvorrichtung (6) umfasst, welche so konfiguriert ist, um Befehle auf der Grundlage der Bewegungsbefehle, die im Aufgabenprogramm (5) enthalten sind, als auch auf der Grundlage von Daten, die Werte von in Bezug auf die Befehle stehenden Variablen und Parametern umfasst, welche für das Ausführen der Befehle notwendig sind, an einen Pfadplaner (7) zu erzeugen und zu senden, welcher so konfiguriert ist, um die Befehle und Daten von der Programmausführungsvorrichtung (6) zu empfangen und auf dieser Grundlage zu planen, wie die Bewegungen des Roboters (1) zu gestalten sind, um ihn in die Lage zu versetzen, die Bewegungsbefehle auszuführen und, basierend darauf, Bezugswerte für Motoren des Roboters zu erzeugen, **dadurch gekennzeichnet, dass** das Verfahren umfasst:
- Aufzeichnen und Speichern der Befehle und der Daten, welche durch die Programmausführungsvorrichtung (6) an den Pfadplaner gesendet werden,
- Verarbeiten der aufgezeichneten Daten und Befehle, so dass die Bewegungen, welche durch den Roboter ausgeführt werden, neu erstellt werden können, und, basierend darauf, Überwachen des Roboters.

7. Verfahren zum Überwachen eines Industrieroboters (1) nach Anspruch 6, **dadurch gekennzeichnet, dass** das Verfahren Aufzeichnen und Speichern des tatsächlichen Augenblicks im Zeitablauf umfasst, zu welchem die Befehle und die Daten von der Programmausführungsvorrichtung (6) zum Pfadplaner (7) gesandt worden sind.

8. Verfahren zum Überwachen eines Industrieroboters (1) nach Anspruch 6 und 1, **dadurch gekennzeichnet, dass** das Verfahren das Übertragen der aufgezeichneten und gespeicherten Befehle und der Daten an eine externe Datenverarbeitungseinheit (3) umfasst.

9. Verfahren zum Überwachen eines Industrieroboters (1) nach Anspruch 8, **dadurch gekennzeichnet, dass** das Verfahren das Übertragen der aufgezeichneten und gespeicherten Befehle und der Daten an eine externe Datenverarbeitungseinheit (3) in Echtzeit umfasst.

10. Verfahren zum Überwachen eines Industrieroboters (1) nach jedem beliebigen der vorangehenden Ansprüche 6-9, **dadurch gekennzeichnet, dass** das Verfahren das Aufzeichnen und Speichern der Steuersignale umfasst, welche vom Steuersystem (2) an die Motoren des Roboters gesandt werden.

## Revendications

1. Système de commande (2) pour un robot industriel (1), dans lequel le système de commande (2) comprend une unité de mémoire (4) contenant un programme de tâche (5) qui comprend des instructions servant à commander les mouvements du robot (1), ainsi qu'un exécuteur de programme (6) configuré pour générer et envoyer des instructions sur la base d'instructions de mouvement incluses dans le programme de tâche (5) ainsi que des données, comprenant des valeurs de variables et de paramètres auxquels il est référence dans lesdites instructions, nécessaires pour pouvoir exécuter lesdites instructions, à un planificateur de chemin configuré pour recevoir lesdites instructions et données en provenance de l'exécuteur de programme (6) et, sur la base de celles-ci, pour planifier comment les mouvement du robot (1) doivent être conçus pour lui permettre d'exécuter lesdites instructions de mouvement et, sur la base de celles-ci, générer des valeurs de référence pour des moteurs du robot, le système de commande (2) comprend un dispositif d'enregistrement auquel est connectée au moins une mémoire (10), et une unité de traitement de données externe dans laquelle les données et instructions enregistrées sont traitées de telle manière que les mouvements effectués par le robot puissent être recréés, **caractérisé en ce que** le dispositif d'enregistrement est conçu dans le but d'enregistrer et de stocker lesdites instructions et lesdites données qui sont envoyées au planificateur de chemin (7) par l'exécuteur de programme (6).

2. Système de commande selon la revendication 1, **caractérisé en ce que** le dispositif d'enregistrement (9) est configuré pour enregistrer des indications temporelles indiquant l'instant réel auquel les instructions et lesdites données ont été envoyées par l'exécuteur de programme (6) au planificateur de chemin (7).

3. Système de commande selon les revendications 1 et 2, **caractérisé en ce que** le système de commande (2) est configuré pour transférer les instructions enregistrées et lesdites données de la mémoire (10) agencée dans le dispositif d'enregistrement (9) à une unité de traitement de données externe (3).

4. Système de commande selon la revendication 3, **caractérisé en ce que** le système de commande (2) est configuré pour transférer les instructions enregistrées et lesdites données de la mémoire (10) agencée dans le dispositif d'enregistrement (9) à l'unité de traitement de données externe (3) en temps réel.

5. Système de commande selon l'une quelconque des revendications précédentes, **caractérisé en ce que** le système de commande (2) comprend en outre un second dispositif d'enregistrement conçu dans le but d'enregistrer et de stocker des signaux de commande envoyés par le système de commande (2) aux moteurs du robot (1).

6. Procédé de surveillance d'un robot industriel (1) comprenant une unité de mémoire (4) contenant un programme de tâche (5) qui comprend des instructions servant à commander les mouvements du robot (1), ainsi qu'un exécuteur de programme (6) configuré pour générer et envoyer des instructions sur la base d'instructions de mouvement incluses dans le programme de tâche (5) ainsi que des données, comprenant des valeurs de variables et de paramètres auxquels il est référence dans lesdites instructions, nécessaires pour pouvoir exécuter lesdites instructions, à un planificateur de chemin (7) configuré pour recevoir lesdites instructions et données en provenance de l'exécuteur de programme (6) et, sur la base de celles-ci, pour planifier comment les mouvement du robot (1) doivent être conçus pour lui permettre d'exécuter lesdites instructions de mouvement et, sur la base de celles-ci, générer des valeurs de référence pour des moteurs du robot, **caractérisé en ce que** le procédé comprend:
- l'enregistrement et le stockage desdites instructions et desdites données envoyées par l'exécuteur de programme (6) au planificateur de chemin,
- le traitement des données et instructions enregistrées de telle manière que les mouvements effectués par le robot puissent être recréés et, sur la base de ceux-ci, la surveillance du robot.

7. Procédé de surveillance d'un robot industriel (1) selon la revendication 6, **caractérisé en ce que** le procédé comprend l'enregistrement et le stockage de l'instant réel auquel les instructions et lesdites données sont envoyées par l'exécuteur de programme (6) au planificateur de chemin (7).

8. Procédé de surveillance d'un robot industriel (1) selon les revendications 6 et 7, **caractérisé en ce que** le procédé comprend le transfert des instructions enregistrées et stockées et desdites données à une unité de traitement de données externe (3).

9. Procédé de surveillance d'un robot industriel (1) selon la revendication 8, **caractérisé en ce que** le procédé comprend le transfert des instructions enregistrées et stockées et desdites données à l'unité de traitement de données externe (3) en temps réel.

10. Procédé de surveillance d'un robot industriel (1) selon l'une quelconque des revendications 6-9 précédentes, **caractérisé en ce que** le procédé comprend l'enregistrement et le stockage des signaux de commande envoyés par le système de commande (2) aux moteurs du robot.
